# EUROPEAN PATENT SPECIFICATION

(11) **EP 4 010 435 B1**
(45) Date of publication and mention of the grant of the patent: **01.04.2026**
(21) Application number: 20750673.4
(22) Date of filing: 06.08.2020
(51) Int. Cl.: C09C 3/00, C09D 17/00, C09D 11/326, C09D 11/322, C09D 11/03, C09D 7/45, C09C 3/10, C09D 11/037

(54) **COLOURING AND FILLER PASTES USING INORGANIC PARTICLES WITH COATED SURFACE AS A SPACER**
FARB- UND FÜLLSTOFFPASTEN, DIE ANORGANISCHE PARTIKEL MIT BESCHICHTETER OBERFLÄCHE ALS ABSTANDSHALTER VERWENDEN
PÂTE DE PEINTURE ET DE MATIÈRE DE REMPLISSAGE UTILISANT DES PARTICULES INORGANIQUES À SURFACE REVÊTUE COMME SUBSTRAT

(30) Priority: 09.08.2019 DE 202019104416 U; 19.12.2019 EP 19217867
(43) Date of publication of application: 15.06.2022
(73) Proprietor: nanoSaar Production GmbH, 66802 Ueberherrn (DE)
(72) Inventor: STEINER, Michael, 82319 Starnberg (DE); CAVELIUS, Christian, 66386 Sankt Ingbert (DE); SCHIRRA, Hermann, 66128 Saarbrücken-Gersweiler (DE)
(74) Representative: Becker, Eberhard
(86) International application number: PCT/EP2020/072141
(87) International publication number: WO 2021/028310

(56) References cited:
- EP-A1- 2 243 808
- WO-A1-03/066743
- WO-A2-2007/012575
- DE-A1- 102011 010 580
- US-A1- 2004 244 622
- M. STEINER, R. HOHMANN, C. CAVELIUS, HERMANN SCHIRRA: "New Spacer Technology for stabilizing Particles", EUROPEAN COATINGS JOURNAL, no. 02-2019, 1 February 2019 (2019-02-01), pages 102 - 107
- JOACHIM WINKLER: "Titanium Dioxide", 2003, VINCENT NETWORK, Hannover, ISBN: 3878701489, article "Chapter 6, "Dispersing of Titanium Dioxide""

## Description

### FIELD OF THE INVENTION

The present invention relates to liquid or pasty pigment and/or filler preparations in which the pigments and/or fillers are finely dispersed by means of inorganic particles and thus the tendency of the pigments and/or fillers to agglomerate is reduced. The liquid pigment and/or filler preparations are excellently suited for the production of various varnishes and paints for various fields of application, but also for the colouring of plastics, for example.

### STATE OF THE ART

Pigments and fillers are used in a variety of paints and varnishes for various applications.

For ecological reasons, the pigmentation of liquid systems, such as varnishes, dispersion paints and printing inks, as well as coatings, is increasingly carried out by means of aqueous preparations which, in addition to the pigment, comprise water and, in some cases, solvents and, if necessary, stabilizing components. In addition to the organic dispersants required to disperse the pigments, these pigment preparations usually require the addition of further complex additives such as defoamers, agents to increase freeze resistance, rheological additives and anti-skinning agents for stabilization. The complex interaction of the individual additives together, however, makes the formulation of these pigment preparations more difficult and leads to undesired effects, which may necessitate the use of further additives and increase the development time and additive consumption. The same applies to equipping liquid systems with fillers.

There is therefore a need for new pigment and/or filler formulations which have a comparable stability and, while retaining their colouristic properties, are comparable to the highly additive-containing preparations described above, but require a significantly smaller quantity of further additives and are thus easier to handle.

The use of colour pastes for pigmentation of varnishes, dispersion paints and printing inks or the production of filler slurries requires the pigments to be dispersed as completely and stably as possible in the dispersion medium (usually water). For this purpose, organic dispersants (polyacrylate salts, fatty acid and fatty alcohol derivatives, acrylate copolymers, MSA copolymers, alkylphenol ethoxylates, Guerbet derivatives (modified fatty acid ethoxylates) are used which interact with the pigment surface, coat it and stabilize the particles via electrostatic, steric or electrosteric mechanisms. In order to stabilize the pigment surfaces, a significant excess of additive is required than appears necessary based on the theoretical surface area of the pigments. Usually, pigment surfaces are effectively stabilized at dispersant concentrations that produce a layer thickness of more than 10 nm. Comparable problems arise in the provision of filler compositions.

The invention is based on the technical problem of providing pigment and/or filler pastes which on the one hand have good application properties such as stability, colour strength and good pigment and/or filler dispersion, but on the other hand are characterised by the fact that they comprise no or a reduced amount of organic additives. Due to the smaller number of components, less attention must be paid to possible incompatibilities of the individual components. This simplifies the production of corresponding pigment and/or filler pastes and makes them more universally applicable.

The problems mentioned above are solved by the present invention.

WO 2003/066743 A1 discloses pigment preparations containing as essential components: (A) 60 to 90 percent by weight of at least one pigment; (B) 10 to 40 percent by weight of at least one non-ionic surface-active additive on the basis of polyethers; and (C) 0.1 to 10 percent by weight of at least one anionic surface-active additive on the basis of sulfonates, sulphates, phosphonates, or phosphates, the total percentage by weight not exceeding 100 percent by weight. Also disclosed are methods for the production thereof and for coloring high-molecular organic and inorganic materials.

WO 2007/012575 A2 relates to solid pigment preparations containing as essential components: (A) 45-90 % by weight at least one type of chromophore component, which contains (A1) 5-100 % by weight at least one type of pigment and (A2) 0-95 % by weight at least one type of inherent colourless filler, (B) 5-50 % by weight at least one type of water-soluble surface-active additive selected from an additive group containing oxide-alkylene groups (B1) and alkylene oxide-free groups (B2), wherein the proportion of the oxide-alkylene groups (B1) containing additives in pigment preparations is equal to or greater than 5 % by weight and (C) from 0.1 to 5 % by weight an antioxidant. The production and use of said pigment preparations for dyeing high molecular weight organic and inorganic materials and plastic materials are also disclosed.

DE 10 2011 010580 A1 discloses an aqueous pigment preparation comprising: (a) 1-75 wt.% of an inorganic white or colored pigment or a mixture of different inorganic white or colored pigments; (b) 0.01-20 wt.% of at least one polyglycol ether carboxylate (I), (c) 0.01-20 wt.% of a nonionic, anionic or amphoteric wetting and dispersing additive comprising surface-active compounds for reducing the surface tension of water to below 45 mN/m in a 0.5% aqueous solution, and (d) water.

US 2004/0244622 A1 discloses a dispersible colorant comprising a colorant and chargeable resin pseudo fine particles having a smaller size than the colorant, and the colorant and the particles are fixed to each other.

M Steriner et al., "New Spacer Technology for Stabilising Particles", European Coating Journal, 2019, 2, 102-107, discloses a nano-additive which may be used as stabilising component.

EP 2 243 808 A1 relates to a pigment paste for tinting a paint, wherein the pigment paste has a viscosity, measured at 23 °C and a shear rate of 100 s, from 0.1 to 8 Pas, and a solid content of at least 60 wt.%. The paste includes at least one pigment and at least one alkyd resin having a viscosity, measured at 23 ° C and at a shear rate of 100 s, of at least 5 Pas, at least one organic solvent, and at least one wetting agent.

Winkler J., "Dispersing of Titanium Dioxide", in Titanium Dioxide, 2003, Vincent Network, Hannover, is a book excerpt discussing several aspects related to dispersion of titanium dioxide.

### DESCRIPTION OF THE INVENTION

According to a first aspect, the present invention is concerned with a liquid or pasty pigment and/or filler preparation. The preparation according to the invention comprises as a component (A) 1 to 70 % by weight of at least one pigment and/or at least one filler and as a component (B) 1 to 25 % by weight of at least one inorganic, particulate component dispersed in the preparation, wherein the inorganic core of the particles of component (B) comprises barium sulphate, calcium sulphate, or calcium carbonate or the core is a barium sulphate particle, a calcium sulphate particle, or a calcium carbonate particle, and wherein the particles of the dispersed component (B) have a particle size distribution with a d50 value in the range of 10 to 500 nm, the determination being carried out by dynamic light scattering according to ISO 22412:2008 to determine the hydrodynamic d50 value.

Furthermore, they have inherently or due to a modification a cationic, anionic, amphoteric or non-ionic surface, which can cause the particles to adhere to the surface of the pigment and/or the filler. The particles of the component (B) are inorganically or organically surface-modified, wherein the surface modifier used for this purpose is selected such that the surface-modified component (B) has a cationic, anionic, amphoteric or non-ionic surface, and the surface-modified component (B) further has in the pigment and/or filler preparation a zeta potential, which, in the case of charged particles of the component (A), is opposite to the charge of these particles or, in the case of uncharged particles of the component (A), has a zeta potential in the range of -60 to +40 mV, so as to cause adhesion of the particles (B) to the pigment and/or filler surface (A).

A cationic surface has a positive electric charge, an anionic surface has a negative charge, an amphoteric surface in the sense of the present invention comprises at least one cationic part and at least one anionic part. A non-ionic surface has no electric charge, but by modification, for example, groups with an affinity for pigments and/or fillers can be added to the surface.

The pigments and/or fillers comprised in the preparation according to the invention may have a positive or negative electrical charge. Alternatively, the pigments and/or fillers may be uncharged, i.e. electrically neutral. A zeta potential opposite to the electric charge of the particles of the component (A) means in the sense of the present invention that in the case of particles of the component (A) with a positive electric charge of the surface, the zeta potential of the particles (B) has a negative value. This can have, but does not need to have an absolute value which corresponds to the absolute value of the positive electric charge of the surface or which comprises this absolute value. In the case of particles of component (A) with a negative electric charge of the surface, the zeta potential of the particles (B) has a positive value. This positive value can have, but does not need to have an absolute value which corresponds to the absolute value of the negative electric charge on the surface or which comprises this absolute amount.

It has been shown that by adjusting the appropriate zeta potential (as a measure of the surface charge density of the inorganic particles), colour pigments and fillers can be stabilized by an organic surface modification in such a way that up to 90 % of the organic dispersing and wetting additives used up to now can be saved.

The preparation according to the invention can optionally further comprise a component (C) with a proportion of 0 to 10 % by weight. Component (C) is at least one surface-active wetting agent which preferably also has dispersing properties. The at least one surface-active wetting agent is preferably included in the liquid or pasty pigment and/or filler preparation according to the invention when the particles of the component (A) are uncharged. The zeta potential of the particles of component (B) in the range of -60 to +40 mV is then obtained under the influence of the surface-active wetting agent.

Furthermore, the liquid or pasty pigment and/or filler preparation according to the invention comprises water and/or at least one solvent as the remainder. The proportion of water and/or solvent is selected such that the proportions of the essential and any optional components, including the proportion of water and/or solvent(s) together make up 100 % by weight.

The statement "as a remainder" is not to be understood as meaning that, as a result, the preparation according to the invention may no longer comprise other components not explicitly mentioned, for example further additives and/or auxiliary substances, as optional component(s). The presence of further optional - also not explicitly named - components is explicitly included within the present invention. In the event that such optional components are to be excluded, the term "consisting of" is used here and in the following. The "remainder" always represents the proportion of water and/or at least one solvent which is necessary after summing up all essential and, if present, optional components to then result in 100 % by weight.

The term "preparation" is used here and in the following synonymously with the term "formulation" or "composition".

Pigments, within the meaning of the present invention, are colourants, i.e. colouring substances. In contrast to dyes, they consist of particles or particulates and they are practically insoluble in the application medium, i.e. the substance or composition into which the pigment is incorporated. Pigments can be distinguished, for example, by their chemical structure, their optical properties and their technical properties, such as corrosion protection and magnetism.

According to the invention, both inorganic and organic pigments are included, whereby both can be of natural or synthetic origin. In addition to their chemical structure, the pigments can also be subdivided with respect to their optical properties. According to the invention, white pigments, colour pigments, black pigments, effect pigments, luster pigments and luminescent pigments are particularly included. A wide range of such pigments is available on the market. They are therefore available to the skilled person.

The group of inorganic pigments of natural origin includes, for example, earths and minerals, such as earth colours and mineral white. The group of inorganic pigments of synthetic origin includes, for example, carbon black, coloured carbon blacks, white pigments, iron oxide pigments and zirconium silicates, which are synthetic products of different but well-known manufacturing processes. Synthetic pigments are often characterized by higher stability and purity and can therefore be superior to pigments of natural origin and therefore be preferred.

Examples of suitable inorganic colour pigments are given below:
- White pigments: titanium dioxide (C.I. Pigment White 6), zinc white, colour zinc oxide; zinc sulphide, lithopones;
- black pigments: iron oxide black (C.I. Pigment Black 11), iron manganese black, spinel black (C.I. Pigment Black 27); carbon black (C.I. Pigment Black 7);
- Coloured Pigments: chromium oxide, chromium oxide hydrate green; chrome green (C.I. Pigment Green 48); cobalt green (C.I. Pigment Green 50); ultramarine green; cobalt blue (C.I. Pigment Blue 28 and 36; C.I. Pigment Blue 72); ultramarine blue; manganese blue; ultramarine violet; cobalt and manganese violet; iron oxide red (C.I. Pigment Red 101); cadmium sulfoselenide (C.I. Pigment Red 108); cerium sulfide (C.I. Pigment Red 265); molybdate red (C.I. Pigment Red 104); ultramarine red; iron oxide brown (C.I. Pigment Brown 6 and 7), mixed brown, spinel and corundum phases (C.I. Pigment Brown 29, 31, 33, 34, 35, 37, 39 and 40), chrome titanium yellow (C.I. Pigment Brown 24), chrome orange; cerium sulfide (C.I. Pigment Orange 75); iron oxide yellow (C.I. Pigment Yellow 42); nickel titanium yellow (C.I. Pigment Yellow 53; C.I. Pigment Yellow 157, 158, 159, 160, 161, 162, 163, 164 and 189); chrome titanium yellow; spinel phases (C.I. Pigment Yellow 119); cadmium sulfide and cadmium zinc sulfide (C.I. Pigment Yellow 37 and 35); chrome yellow (C.I. Pigment Yellow 34); bismuth vanadate (C.I. Pigment Yellow 184).

The organic pigments covered by the invention are preferably organic coloured and black pigments, which are even more preferably present in finely divided form in the size range of 2 to 10,000 nm. The organic pigments included in the scope of the invention may again be of natural or synthetic origin.

Examples of suitable organic colour pigments are given below:
Monoazo pigments:
   C.I. Pigment Brown 25;
   C.I. Pigment Orange 5, 13, 36, 38, 64 and 67;
   C.I. Pigment Red 1, 2, 3, 4, 5, 8, 9, 12, 17, 22, 23, 31, 48:1, 48:2, 48:3, 48:4, 49, 49:1, 51:1, 52:1, 52:2, 53, 53:1, 53:3, 57:1, 58:2, 58:4, 63, 112, 146, 148, 170, 175, 184, 185, 187, 191:1, 208, 210, 245, 247 and 251;
   C.I. Pigment Yellow 1, 3, 62, 65, 73, 74, 97, 120, 151, 154, 168, 181, 183 and 191;
   C.I. Pigment Violet 32;
Diazo pigments:
   C.I. Pigment Orange 16, 34, 44 and 72;
   C.I. Pigment Yellow 12, 13, 14, 16, 17, 81, 83, 106, 113, 126, 127, 155, 174, 176, 180 and 188;
Diazo condensation pigments:
   C.I. Pigment Yellow 93, 95 and 128;
   C.I. Pigment Red 144, 166, 214, 220, 221, 242 and 262;
   C.I. Pigment Brown 23 and 41;
Anthanthrone pigments: C.I. Pigment Red 168;
Anthraquinone pigments: C.I. Pigment Yellow 147, 177 and 199; C.I. Pigment Violet 31;
Anthrapyrimidine pigments: C.I. Pigment Yellow 108;
Quinacridone pigments: C.I. Pigment Orange 48 and 49; C.I. Pigment Red 122, 202, 206 and 209; C.I. Pigment Violet 19;
Quinophthalone pigments: C.I. Pigment Yellow 138;
Diketopyrrolopyrrol pigments: C.I. Pigment Orange 71, 73 und 81; C.I. Pigment Red 254, 255, 264, 270 und 272;
Dioxazine pigments: C.I. Pigment Violet 23 und 37; C.I. Pigment Blue 80;
Flavanthrone pigments: C.I. Pigment Yellow 24;
Indanthrone pigments: C.I. Pigment Blue 60 und 64;
Isoindoline pigments: C.I. Pigmente Orange 61 und 69; C.I. Pigment Red 260; C.I. Pigment Yellow 139 und 185;
Isoindolinone pigments: C.I. Pigment Yellow 109, 110 und 173;
Isoviolanthrone pigments: C.I. Pigment Violet 31;
Metal complex pigments: C.I. Pigment Red 257; C.I. Pigment Yellow 117, 129, 150, 153 und 177; C.I. Pigment Green 8;
Perinone pigments: C.I. Pigment Orange 43; C.I. Pigment Red 194;
Perylene pigments: C.I. Pigment Black 31 und 32; C.I. Pigment Red 123, 149, 178, 179, 190 und 224; C.I. Pigment Violet 29;
Phthalocyanine pigments: C.I. Pigment Blue 15, 15:1, 15:2, 15:3, 15:4, 15:6 und 16; C.I. Pigment Green 7 und 36;
Pyranthrone pigments: C.I. Pigment Orange 51; C.I. Pigment Red 216;
Pyrazolochinazolone pigments: C.I. Pigment Orange 67; C.I. Pigment Red 251;
Thioindigo pigments: C.I. Pigment Red 88 und 181; C.I. Pigment Violet 38;
Triarylcarbonium pigments: C.I. Pigment Blue 1, 61 und 62; C.I. Pigment Green 1; C.I. Pigment Red 81, 81:1 und 169; C.I. Pigment Violet 1, 2, 3 und 27;
C.I. Pigment Black 1 (aniline black);
C.I. Pigment Yellow 101 (aldazine yellow);
C.I. Pigment Brown 22

The luster pigments are preferably single-phase or multi-phase platelet-shaped pigments whose play of colours is characterized by the interplay of interference, reflection and absorption phenomena. Examples are aluminium platelets and aluminium, iron oxide and mica platelets coated one or more times, especially with metal oxides.

The pigment is/are comprised in the pigment preparation according to the invention in pure form or as a mixture of two or more pigments and/or as a mixture with one or more fillers. Pigment mixtures comprise both all possible mixtures of the above-mentioned inorganic and organic pigments, irrespective of whether they are of natural or synthetic origin and irrespective of the optical properties of the pigments comprised in the mixture, and the mixture of one or more of these pigments with one or more fillers, in particular the fillers described below. Mixing with fillers makes it possible to reduce the tinting strength, which means that small quantities can be dosed more effectively.

Fillers, in the sense of the present invention, are insoluble additives which are added to an intermediate or final product in order to, inter alia, modify the mechanical, electrical or processing properties of materials and/or to reduce the proportion of other, typically more expensive components in the product. Fillers are present in the product in particulate form, i.e. as particles.

In paints, fillers are preferably used to increase the volume and to change technical and optical properties. Pigments can also serve as fillers. Whether a colouring, insoluble substance is considered a filler or a pigment depends on its application.

Coating materials, such as varnishes, are first applied to objects in liquid or powder form and then harden. Fillers are used here to influence the processing, the technical properties, the optical appearance and sometimes also the haptics of a surface.

Like the pigments, fillers can be inorganic or organic in nature. In both cases they can be of natural or synthetic origin. According to the invention, natural inorganic fillers, natural organic fillers, synthetic inorganic fillers and synthetic organic fillers are included.

Examples of inorganic particles commonly used as fillers are transparent silica, silica flour, aluminium oxide, aluminium hydroxide, natural mica, natural and precipitated chalk, calcium carbonate, phyllosilicates such as magnesium silicate hydrate, especially talc, and barium sulphate. Fillers particularly preferred in the varnish industry comprise in particular calcium carbonate, talc, barium sulphate, aluminum hydroxide and mixtures thereof. Organic fillers include, for example, cellulose derivatives and carbon fibers.

If the pigment and/or filler preparation according to the invention comprises barium sulphate as a filler, this barium sulphate is barium sulphate particles obtained by a conventional grinding process. Such barium sulphate particles have an average size in the range of 350 to 650 nm.

The filler(s) is/are contained in the pigment and/or filler preparation according to the invention in pure form or as a mixture of two or more fillers and/or as a mixture with one or more pigments. Mixtures of fillers comprise both all possible mixtures of the above mentioned inorganic and organic fillers, irrespective of they are of natural or synthetic origin and irrespective of the function they perform in the preparation, and the mixture of one or more of these fillers with one or more pigments, in particular the above mentioned pigments.

The proportion of the at least one pigment and/or the at least one filler in the preparation according to the invention is 1 to 70 % by weight. Preferably the proportion of the at least one pigment and/or of the at least one filler is 2 to 60 % by weight, even more preferably 3 to 50 % by weight. The pigment and/or filler preparation according to the invention can thus, if desired, provide a high and standardized, pre-dispersed pigment and/or filler concentration.

The preparation according to the invention comprises as component (B) at least one inorganic particulate component dispersed in the preparation, which is inorganically or organically surface-modified. The component (B) thus has an inorganic core and an organic or inorganic layer on the surface of the core, as it is surface-modified.

The particulate component is insoluble or only slightly soluble in the dispersing medium and is therefore present in dispersed form. The dispersing medium means the pigment and/or filler preparation with all essential and optional components, except the component (B).

The surface modification can influence the interaction of the particles of the component (B) with their environment, and especially with the pigment and/or filler particles (component (A)). The interface can make a decisive contribution to the performance, i.e. the particle-stabilizing property and/or the dispersion-supporting property of the inorganic particles (component (B)). Likewise, a surface modification can improve the wetting properties. By modifying the surface, the surface can therefore be equipped and tailored to these properties in particular. Thus, the surface properties of the particles of component (B) can be adjusted so that they adhere to the pigments and/or fillers to be dispersed (component (A)). Most pigments on the market, such as coloured carbon blacks, have a negatively charged surface and thus a negative zeta potential in an aqueous environment. In accordance with the invention, particles with a zeta potential > 0 mV are used as component (B) for pigments and/or fillers with a negatively charged surface in order to achieve a coating of the pigment or filler surface by electrostatic interaction during the dispersion process. If the pigments and/or fillers have a positively charged surface, particles with a zeta potential < 0 mV are used as component (B) in accordance with the invention, in order to achieve a coating of the pigment or filler surface by electrostatic interaction during the dispersion process. If the pigments and/or fillers do not have a charged surface, component (B) is particles with a zeta potential in the range from -60 to +40 mV. Furthermore, particles (B) used according to the invention can carry pigment or filler affinity and/or sterically demanding groups which, after binding of the particles (B) on the pigment or filler surface, bring about additional stabilization of the pigment and/or filler preparation. Groups of the surface modifier with affinity for pigments or fillers can cause the particles of component (B) to be attracted and adhere to the surface of component (A) or reinforce the attraction and adhesion of the particles of component (B) to the surface of component (A) caused by the arising zeta potential. Sterically demanding groups can lead to steric repulsion. A strongly dispersing effect can be obtained by both effects individually, but especially by the interaction of the two counteracting effects.

The particles of the dispersed component (B) can have a positive or negative zeta potential in the pigment and/or filler preparation. The zeta potential in the sense of the present invention means the electrical potential at the shear layer of the moving particles of the dispersed inorganic and optionally or preferably surface-modified component (B) in a dispersion medium. If charged particles are in suspension, their potential is compensated by the accumulation of ions in the suspension medium. On the particle surface, firmly bound ions accumulate in the so-called Helmholtz layer. Further ions are deposited in a diffuse, i.e. disordered, layer. This makes the particle appear electrically neutral from a great distance, because all particle charges are compensated by ions of the suspension medium. If a particle moves, friction shears off a part of the loosely bound diffuse layer and the particle no longer appears electrically neutral but has a potential again. This potential at the shear-off line is the zeta potential (surface potential).

In the context of this invention the zeta potential is measured in accordance with ISO 13099-2:2012 by electrophoretic light scattering.

According to the invention, the core of the particles of component (B) most preferably comprises barium sulphate or consists of barium sulphate.

The inorganic particulate component (B) described above is obtainable or can be obtained according to an embodiment of the invention by one of the manufacturing processes for this component (B) described in detail below.

The proportion of the at least one inorganic particulate component (B) dispersed in the preparation in accordance with the invention is 1 to 25 % by weight. The proportion of the at least one inorganic particulate component (B) dispersed in the preparation is preferably 1.2 to 22 % by weight, even more preferably 1.4 to 20 % by weight. In an embodiment of the invention, the upper limit of the proportion of the inorganic particulate component in the preparation according to the invention is 20 % by weight.

The pigment and/or filler preparation according to the invention is in liquid or pasty form. It goes without saying that the liquid or pasty state is not solely substance-specific, but also depends on external factors such as temperature and pressure. For the purposes of the present invention, a liquid or pasty state means that the preparation is liquid or pasty at normal pressure (1013.25 hPa) and at least in a temperature range of 1 to 70 °C, preferably in a temperature range of 5 to 60 °C. A pasty preparation differs from a liquid preparation in that pastes are suspensions with a higher degree of filling of solids, in particular pigment and/or filler.

Depending on the field of application of the preparation according to the invention, the essential components (A) and (B) are pre-dispersed in water and/or one or more solvents. Any optional components are also included in this dispersion.

Suitable solvents include, depending on the field of application, organic solvents, such as alcohols, esters, ketones, aliphatic and aromatic solvents, UV-curable monomers and mixtures thereof, as well as any mixtures of different solvents, in particular any mixtures of the aforementioned solvents, for example mixtures of one or more aromatic solvents and one or more esters. The solvents, preferably the organic solvents, are preferably those which are miscible with water. Examples of water-miscible solvents include C₃-C₄ ketones such as acetone and methyl ethyl ketone, cyclic ethers such as dioxane and tetrahydrofuran, C₁-C₄ alkanols such as methanol, ethanol, n-propanol, isopropanol, n-butanol, tert. butanol, polyols and their mono- and dimethyl ethers such as glycol, propanediol, ethylene glycol monomethyl ether, diethylene glycol, diethylene glycol monomethyl ether, diethylene glycol dimethyl ether, glycerol, furthermore C₂-C₃ nitriles such as acetonitrile and propionitrile, dimethylsulfoxide, dimethylformamide, formamide, acetamide, dimethylacetamide, butyrolactone, 2-pyrrolidone and N-methylpyrrolidone.

In addition to the essential components mentioned above and the optional wetting agent (component (C)), the pigment and/or filler preparation according to the invention may comprise further additives and/or auxiliary substances as optional component(s). The additives and/or auxiliaries may also be added in order to formulate the pigment and/or filler preparation according to the invention in the same way as the later end product, e.g. the varnish or paint, in order to achieve compatibility.

Thus, the pigment and/or filler preparation according to one embodiment may further comprise at least one binder and/or at least one grinding resin. The proportion of binder or binder mixture in the composition, if present, is preferably 0.1 to 40 % by weight, even more preferably 0.2 to 25 % by weight. Binders suitable for the formulation of pigment and/or filler preparations are known to the skilled person. For example, the binder is selected from the group consisting of alkyd resins, epoxy resins, silicone resins, polyacrylates, in particular acrylate copolymers, and any mixture thereof. In particular, an acrylate copolymer dispersion (for example NeoCryl^{®} BT-24 EU) can be used as a binder.

According to another embodiment, the pigment and/or filler preparation according to the invention is free of binder. The proportion of binder is therefore 0 % by weight (apart from any unavoidable impurities).

The proportion of the at least one grinding resin is preferably 0.1 to 10 % by weight, even more preferably 0.2 to 8 % by weight.

Other additives or auxiliaries can be anionic, cationic, non-ionic or amphoteric surfactants, for example Surfynol^{®} 104 E, and dispersing agents. The group of additives and auxiliaries can also include biocidal substances such as Ebotec MT15SF.

Thus, the pigment and/or filler preparation according to the present invention may further comprise at least one surfactant, which can be anionic, cationic, nonionic or amphoteric, or any mixture of these surfactants. The proportion of the surfactant or the surfactant mixture in the preparation, if present, is preferably 0.1 to 2 % by weight, even more preferably 0.2 to 1.5 % by weight and still more preferably 0.3 to 1 % by weight. Surfactants suitable for the formulation of pigment and/or filler preparations are known to the skilled person. For example, the surfactant is selected from the group consisting of nonionic, organic gemini surfactants, nonionic polyether modified siloxanes, nonionic silicone and solvent free surfactants, and any mixture thereof. A non-ionic gemini surfactant can be siloxane-based. Gemini surfactants are a group of surfactants with more than one hydrophilic head group and hydrophobic tail group linked by a spacer at or near the head groups. For example, at least one surfactant from the Surfynol^{®} product family, e.g. Surfynol^{®} 104 E, can be used as surfactant.

In addition to one or more of the above mentioned additives or auxiliaries, for example the one or more surfactant(s), or alternatively the pigment and/or filler preparation according to the present invention may further comprise at least one dispersing agent. Dispersing agents for the formulation of pigment and/or filler preparations are known to the skilled person. The dispersing agent can be one or more copolymers, e.g. a polyvinyl copolymer, with functional groups that have a high affinity for pigments, for example dispersing agents from the Zetasperse^{®} product family, and/or can be dimethylaminoethanol and/or can be one or more polyelectrolyte(s). Preferably the one or more dispersing agent(s) correlate(s) with the charge of the surface-modified particle in terms of its charge or partial charge. The proportion of the dispersing agent or the dispersing agent mixture in the preparation, if present, is preferably 0.1 to 10 % by weight, even more preferably 0.2 to 8 % by weight, still more preferably 0.3 to 6 % by weight, further preferably 0.4 to 4 % by weight or 0.5 to 2 % by weight.

As can be seen from the above, for example compounds of the Zetasperse^{®} product family can provide at least a dual function. They may be used for direct surface modification of the inorganic particle core of component (B), and/or they may be used to further improve the dispersibility of otherwise primarily surface-modified particles (B), for example by interacting with the primary surface modifier.

However, according to the invention, it may also be preferred that the pigment and/or filler preparation is free from other additives and/or auxiliaries, except for the optional wetting agent (component (C)) or comprises these other additives and/or auxiliaries in lower amounts and/or fewer different additives and/or auxiliaries are required to achieve the same or a comparable effect. The lower the addition and/or the proportion of such additives and/or auxiliaries, the higher the compatibility with various end products, e.g. various paint and varnish systems.

In the pigment and/or filler preparations described above, the dispersed particles of the inorganic and preferably surface-modified component (B) act as spacers / physical spacers between the pigment or filler particles. They thus reduce the tendency of the pigments and/or fillers to agglomerate. They thus promote a fine distribution of the pigments and/or fillers in the dispersion medium. In turn, this makes it possible to provide preparations which are standardized with regard to their concentration of pigment and/or filler, which can then be used to advantage for standardized colouring and/or modification of the desired end products, such as paints, varnishes, plastics, etc.

In accordance with the invention, the particles of the dispersed inorganic and surface-modified component (B) have a particle size distribution with a d50 value in the range of 10 to 500 nm, preferably in the range of 20 to 300 nm, and particularly preferably in the range of 25 to 200 nm. Suitable methods for determining the particle size distribution are known to the expert. In the context with this invention the determination is carried out by dynamic light scattering according to ISO 22412:2008 and the hydrodynamic d50 value is determined.

Surprisingly, an average size d50 in the range of 10 to 500 nm has proven to be particularly advantageous because such particles perform a particularly advantageous spacer function and prevent or at least reduce agglomeration or even aggregation of the pigment or filler particles. These small particles can effectively stabilize particularly fine-particle pigments with the same material input.

According to a preferred embodiment of the present invention, the particles of the inorganic and surface-modified component (B) are electrostatically, sterically or electrosterically, preferably sterically or electrosterically, particularly preferably electrosterically stabilized in the pigment and/or filler preparation according to the invention.

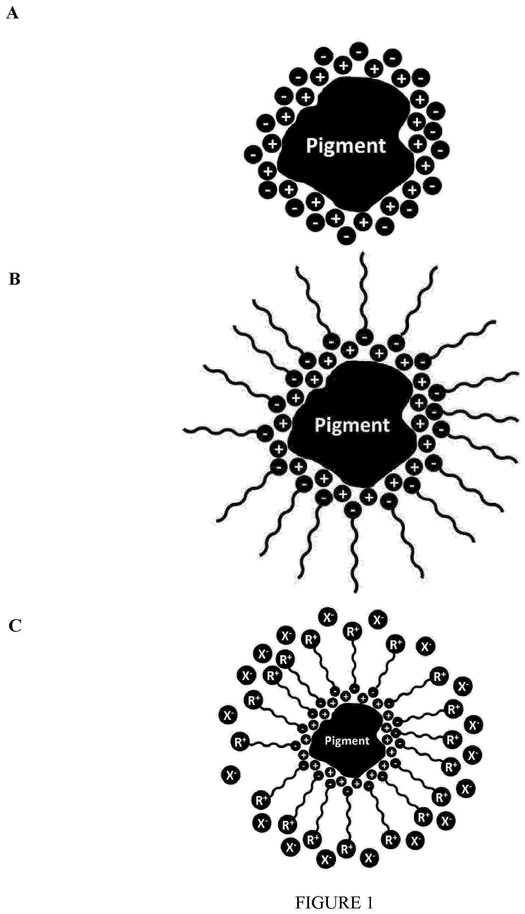

An electrostatic stabilization (see Figure 1) is based on the principle that when two particles approach each other, the double layers of the particles influence each other. If they have opposite charges, they attract each other; if they have the same charge, they repel each other. The interaction between these electrostatic forces and the attracting London-van der Waals forces is described by the DLVO theory. The surface charge of the pigment or filler particles can be strongly influenced by suitable additives. For example, by the targeted generation of strong charges, a high repulsion potential of the pigment or filler particles is achieved and thus flocculation is pushed back. Polyelectrolytes are particularly suitable as dispersing additives which act in this way. Due to their polymer structure, they adsorb easily and permanently on the pigment surface and produce strong surface charges due to their large number of ionic groups. This type of stabilization is particularly suitable for aqueous systems, since only here (due to the high dielectric constant of water) are sufficiently strong charges formed. However, it is not limited to this. Besides the dielectric constant, the ion concentration and especially the valence of the ions have a strong influence on the electrical double layer. High ion concentration and polyvalent ions (even in low concentrations) can considerably impair stabilization and even cause it to collapse completely. If the particles of the component (A) and the component (B) have a different charge or zeta potential, component (B) can bind to the surface of component (A). Pigments or fillers loaded with the component (B) repel each other electrostatically.

Steric stabilization means that instead of using electrical charges, substances adsorbed on the surface, especially polymer layers, can build up a repulsion potential between dispersed particles. For example, each particle is surrounded by a shell of solvated polymer molecules and when two particles approach each other, these polymer shells overlap and penetrate each other. This increases the polymer concentration in the overlap area and the osmotic pressure transports solvent into this area, which in this way forces the particles apart again. In addition, the polymer molecules are restricted in their conformation in the overlap area, which means a reduction of entropy and therefore also presents itself as a potential for repulsion. Depending on the system, an enthalpic contribution to stabilization is possible in addition to the entropic one.

Electrosteric stabilization combines both mechanisms. The electric charges responsible for repulsion are located at the end of the chains extending into the dispersing medium.

The surface modifier of the component (B) is preferably at least one organic compound. Even more preferred is the organic compound selected from the group consisting of anionic, cationic, non-ionic, amphoteric or multifunctional molecules, or polymers, copolymers, block copolymers, and any mixtures thereof. The organic compounds are preferably characterized by a high affinity to the particle surface and can preferably simultaneously have a steric or electrosteric stabilizing effect on pigments or fillers. In a particularly preferred embodiment of the present invention, the surface modifier of component (B), and in particular the one or more of the above-mentioned organic compounds, has one or more groups having an affinity for pigments and/or fillers. A preferred surface modifying polymer is selected from the group consisting of a polycarboxylate ether, a polyacrylate, a polymethacrylate, a polyvinyl, a copolymer, in particular a block copolymer comprising a polycarboxylate ether, a polyacrylate, and/or a polymethacrylate, a polyvinyl, and any mixtures thereof. The block copolymers comprise at least one polymer block of one polymer type, preferably selected from the group consisting of a polycarboxylate ether, a polyacrylate, a polymethacrylate, and a polyvinyl, and at least one polymer block of another polymer type. The block copolymer may be amphiphilic and include at least one hydrophilic polymer block and at least one hydrophobic polymer block. The production of block copolymers is common to the skilled person.

These preferred surface-modifying polymers may be equipped with one or more groups with affinity for pigments and/or fillers. In an embodiment of the invention, the surface-modifying polymer is a polycarboxylate ether, in particular a polycarboxylate ether with groups having affinity for pigments or fillers.

Molecules, polymers, copolymers or block copolymers suitable as surface modifiers are known to the skilled person and are commercially available, for example, as so-called wetting additives and dispersing additives. For example, the following commercially available wetting additives and dispersing additives are suitable for surface coating the core of component (B): Byk LP N 22669, Carbowet GA 211, Carbowet GA 221, Efka WE 3110, Efka FA 4671, Edaplan 490, Edaplan 494, Edaplan 516, Disperbyk 180, Disperbyk 182, Disperbyk 184, Disperbyk 191, Disperbyk 192, Disperbyk 2010, Disperbyk 2060, Dispersogen PCE, Dispex CX 4320, Dispex Ultra PX 4275, Dispex Ultra FA 4420, Dispex Ultra FA 4480, Dispex Ultra PX 4425, Dispex Ultra PX 4575, Metolat 514, Tego Dispers 757W, Tego Dispers 755W, Tego Dispers 760W, Zetasperse 3600, Zetasperse 3700 and any combinations thereof.

Comb polymers are particularly suitable as surface modifiers. Comb polymers are a special form of branched polymers which open up interesting fields of application due to their specific structure. Comb polymers combine different polymer segments with different properties in one macromolecule. This enables very complex mechanisms of action to be realized. Suitable comb polymers of this invention are for example PCEs of the Melpers, Melflux, MasterEase, Master Glenium, MasterSuna Series (BASF, Trostberg) or the Viscocrete Series (Sika, Sika Deutschland GmbH), Dispersogen PCE (Clariant Produkte GmbH), the Ethacryl Series from Arkema, Colombe and the MIGHTY Series of Kao Specialties Americas, LLC, (High Point, N.C.).

In the context of the present invention, a comb polymer is understood to be a polymer with a, preferably linear, main chain or with a, preferably linear, backbone, which has one or more different types of side chains at more or less regular intervals. The side chains may be longer side chains of almost equal length to one another, for example of aliphatic nature. Comb polymers can be built up of linear chains containing functional groups to which side chains are grafted or introduced by polymer-analogous reactions. Another possibility for the synthesis of comb polymers is the coupling of macromonomers. Comb polymers as such and methods for their synthesis are known to the skilled person. According to a preferred embodiment of the present invention, the pigment and/or filler preparation according to the invention comprises as component (B) an inorganic core which preferably comprises or consists of barium sulphate and which is surface-modified with a comb polymer.

According to another preferred embodiment, the comb polymer used for surface modification comprises a polyacrylate polymer or a polyacrylate block copolymer as the main chain, or the main chain consists of a polyacrylate polymer or a polyacrylate block copolymer. Alternatively, the main chain comprises a polymethacrylate polymer or a polymethacrylate block copolymer or the main chain consists of a polymethacrylate polymer or a polymethacrylate block copolymer. Further, alternatively, the main chain comprises a polycarboxylate, a polycarboxylate ether or corresponding block copolymer or the main chain consists of a polycarboxylate, a polycarboxylate ether or a corresponding block copolymer. By using them, both the steric requirement and the surface charge density on the pigment or the filler can be adapted particularly advantageously.

The side chains of these preferred comb polymers are preferably polyethylene glycol chains or comprise such chains. Polyethylene glycol is also abbreviated below as "PEG". PEG is a water-soluble polymer with the general empirical formula C₂ₙH₄ₙ₊₂Oₙ₊₁. The repeating unit of the linear polymer is (-CH₂-CH₂-O-). The chain length and the resulting molar mass influence the properties of the PEG. Polyethylene glycols, which are particularly preferred as side chains of comb polymers, have a number average molecular weight Mn in the range of 500 to 10,000 g/mol, even more preferably in the range of 600 to 8,000 g/mol, most preferably in the range of 700 to 6,000 g/mol.

According to the invention, comb polymers, in particular comb polymers which have a main chain comprising a polyacrylate polymer or a polyacrylate block copolymer, a polymethacrylate polymer or a polymethacrylate block copolymer, a polycarboxylate and/or a polycarboxylate ether or a polycarboxylate block copolymer or polycarboxylate ether block copolymer or the main chain consists thereof, which have a number-average molecular weight Mn in the range of 15,000 g/mol to 2,000,000 g/mol are preferred. Still more preferred the number-average molecular weight Mn is in the range of 40,000 g/mol to 1,000,000 g/mol. The ratio Mw/Mn is preferably in the range of 1.1:1 to 10:1, even more preferably in the range of 1.2:1 to 5:1. The side chains of these preferred comb polymers are preferably polyethylene glycol chains or comprise such chains, in particular those with a number average molecular weight Mn in the range of 500 to 10,000 g/mol, even more preferably in the range of 600 to 8,000 g/mol, most preferably in the range of 700 to 6,000 g/mol.

The molar masses Mn of the comb polymers can be determined, for example, by gel permeation chromatography using suitable calibration kits as calibration material.

The combination of the one or more surface modifiers described above with the particulate, inorganic core of component (B) results in surface-coated particles which can be used particularly advantageous as wetting and dispersing additives for pigment and/or filler preparations. In their stabilizing effect, they outperform the individual components, i.e. the surface modifier as such and the inorganic particles as such. They act synergistically together, so that, for example, significantly lower amounts of component (B) have to be used to achieve the same effect.

Thus, the one or more surface modifier, possibly also in interaction with the other optional components of the pigment and/or filler preparation, for example the one or more dispersing agent(s) and/or the one or more wetting agent(s), may provide several effects, which by their interaction are finally involved in the formation of the resulting zeta potential.

First, the surface modifier can effect the stabilization of the particles of component (B) with regard to growth and agglomeration during their preparation process. As will be described in detail below, the particles of component (B) can for example be prepared by a so-called MJR process.

Second, the surface modifier can also effect the wetting of the particles surfaces. This means both the wetting of the particles of component (B) and also the wetting of the pigment or filler surface, i.e. the surface of component (A).

Third, the surface modifier can also effect the interaction of the particles of component (B) with the particles of component (A) of the present invention.

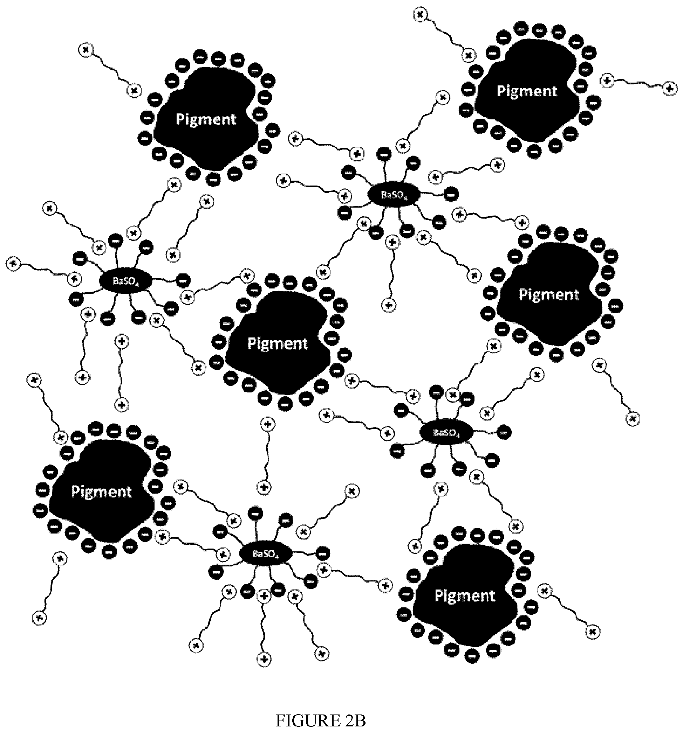

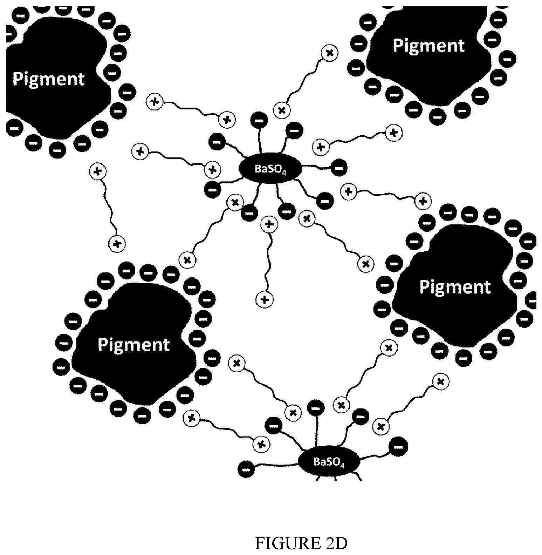

The one or more surface modifier can be selected such that they perform all functions, but it is also within the scope of the present invention that in addition to one or more surface modifier at least one wetting agent and/or at least one additive, for example one or more dispersing agent(s), is employed to provide or further improve these effects. For example, as is shown in Figure 2B and 2D of the present invention, in addition to a surface modifier or a surface-modified particle (B), a dispersing agent is comprised. The dispersing agent correlates with the charge of the surface-modified particle (B) in terms of its charge or partial charge. In this constellation the surface modifier and the dispersing agent in combination are responsible for the formation of the resulting zeta potential.

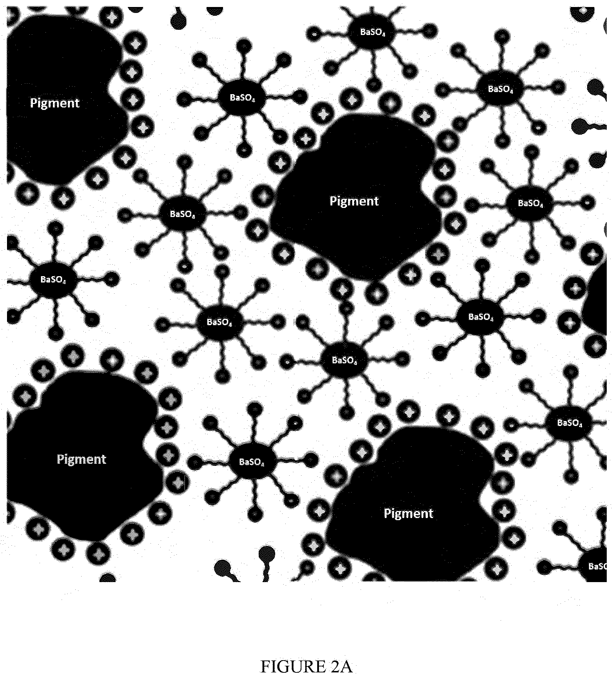

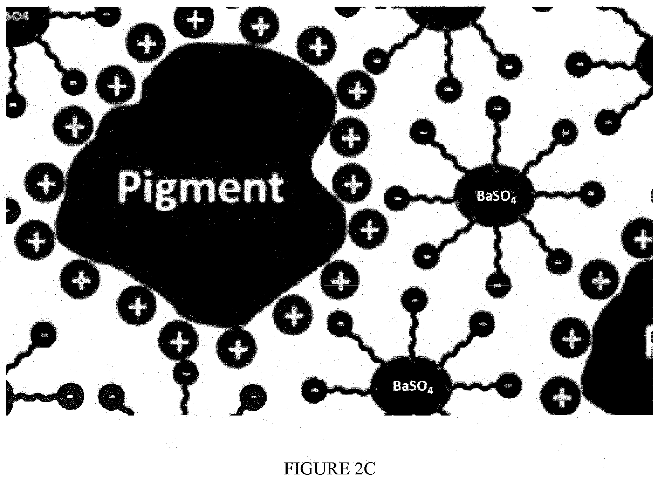

According to another embodiment, the surface modifier has dispersion-supporting and wetting properties in addition to the particle-stabilizing property. Such a constellation is exemplarily shown in Figures 2A and 2C.

According to a further preferred embodiment of the pigment and/or filler preparation according to the invention, the mass proportion of the surface modifier, in particular of the preferred and particularly preferred surface modifiers described above, for example the comb polymers, is 0.1 to 50 %, preferably 0.2 to 10 %, based on the inorganic core of the particles of component (B). These range specifications also apply, for example, to those embodiments of the invention, in which the inorganic core of the particles of component (B) comprises barium sulphate or the core consists of barium sulphate.

In a particularly preferred embodiment, the zeta potential of component (B), in particular the zeta potential of one of the preferred or particularly preferred components (B) described above, lies in the range of -70 mV to -2 mV, even more preferably in the range of -60 mV to -3 mV. This applies with the proviso that component (A) has a positive surface charge.

In the event that component (A) has a negative surface charge, it is according to the invention particularly preferred, that the zeta potential of component (B), in particular the zeta potential of one of the preferred or particularly preferred components (B) described above, is in the range of +0.5 mV to +40 mV, even more preferably in the range of +1 mV to +35 mV.

These preferred values for the zeta potentials make it possible to achieve a particularly effective stabilization of the respective component (A) while at the same time using less material.

As explained above, the particles of component (A) can be non-polar. In such a case, it is according to the invention preferred that the pigment and/or filler preparation comprises at least one wetting agent. However, the wetting agent or the wetting agent mixture can also be used if the dispersed particles of component (B), and the pigment(s) and/or the filler(s) have the same charge, and/or if the pigment and/or filler body (component (A)) has a surface charge opposite to the zeta potential of component (B). The additional wetting agent(s) (component (C)) facilitates contact of the particles (B) with the pigment or filler surface and ensures adequate deaeration of the pigment or filler powder.

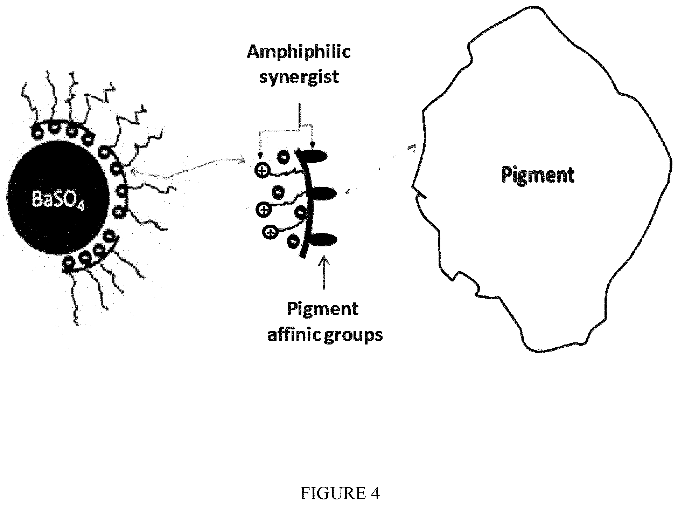

Both strongly surface-active low-molecular compounds and complex polymers with dispersing properties can be used as wetting agents. Particularly preferred wetting agents are AB block copolymers, BAB block copolymers, as well as comb polymers such as Dispersogen PCE (Clariant), which have components with pigment affine groups, as well as a hydrophilic part, which can be non-ionic, cationic, anionic or amphiphilic. It is preferred in the invention that the at least one wetting agent is either an amphiphilic molecular or polymeric wetting agent, an anionic molecular or polymeric wetting agent, a cationic molecular or polymeric wetting agent, or any mixture of one or more of these wetting agents. Even more preferably, amphiphilic, cationic or anionic wetting agents have pigment wetting properties. They may, for example, and preferably have pigment and/or filler affinity groups which are preferably alkyl groups, especially those in which 1 to 10 carbon atoms are linked together (see also Figure 4).

Preferably the zeta potential of the resulting component (B) plus wetting agent and/or dispersing agent is in the range of -60 mV to +40 mV.

If present, the proportion of wetting agent or wetting agent mixture in the pigment and/or filler preparation according to the invention is preferably in the range of 0.1 to 10 % by weight, even more preferably in the range of 0.2 to 8 % by weight, more preferably in the range of 0.3 to 6 % by weight.

However, it is also according to the invention that the pigment and/or filler preparation does not contain a wetting agent, apart from possible impurities. According to one embodiment, the proportion of wetting agent is thus 0 % by weight.

The particulate component (B) can be produced by controlled precipitation, co-precipitation and/or self-organisation processes in a microjet reactor, herein also referred to as "MJR". A microjet reactor corresponding to EP 1 165 224 B1 is preferably used. Such a microjet reactor has at least two nozzles located opposite one another, each with an associated pump and feed line 1, 2 for spraying one liquid medium at a time into a reactor chamber enclosed by a reactor housing at a common collision point, wherein furthermore optionally an opening 3 is provided in the reactor housing through which a gas, an evaporating liquid, a cooling liquid or a cooling gas can be introduced to maintain the gas atmosphere in the reactor interior, in particular at the collision point of the liquid jets, or to cool the products formed. The opening 3 can also be used to supply a reactant, for example in form of a slurry or suspension to the reaction chamber. The reactor comprises a further opening 4 for removing the resulting products from the reactor housing. Thus, a gas, an evaporating liquid or a cooling gas can be introduced into the reactor chamber via an opening 3 to maintain a gas atmosphere inside the reactor, in particular at the collision point of the liquid jets, or to cool the resulting products, and the resulting products and excess gas can be removed from the reactor housing through an opening 4 by overpressure on the gas inlet side or by underpressure on the product and gas outlet side. With such a reactor it is possible to generate very small particles, in particular particles with the preferred sizes can be produced.

To produce the particulate component (B), a jet of a first reactant or a first reactant mixture emerging from the first nozzle and a jet of a second reactant or a second reactant mixture emerging from a second nozzle are directed towards one another at defined pressures and flow rates in the reactor space of the microjet reactor at a collision point. The optional gas inlet allows the microjet reactor to gass the reactor chamber, and the product obtained at the collision point is discharged via the product outlet.

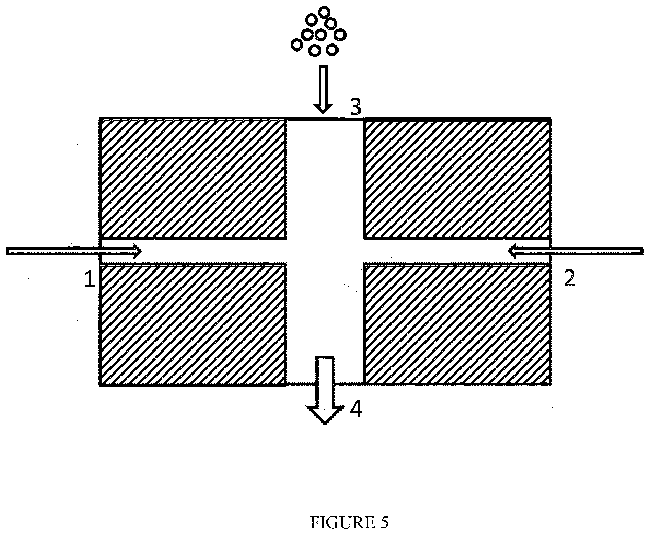

The particulate component (B), but also any other product obtainable by the MJR technology, can also be produced by directing jets of a first reactant or a first reactant mixture emerging from the first nozzle and the second nozzle, and a stream of a second reactant or a second reactant mixture entering the reaction chamber via the opening 3 towards one another at defined pressures and flow rates in the reactor space of the microjet reactor at a collision point, as is shown in Figure 5. Still further, it is depending on the actual need possible to produce the particulate component (B), but also any other product obtainable by the MJR technology, by directing a jet of a first reactant or a first reactant mixture emerging from the first nozzle and a jet of a second reactant or a second reactant mixture emerging from a second nozzle and a stream of a third reactant or a third reactant mixture entering the reaction chamber via the opening 3 towards one another at defined pressures and flow rates in the reactor space of the microjet reactor at a collision point.

The product can be obtained in the form of a dispersion. Such dispersions can be obtained by solvent/nonsolvent precipitation, as described for example in EP 2 550 092 A1. Solvent/nonsolvent precipitation in this context means that a substance or mixture of substances is dissolved in a solvent and collides as a liquid jet with a second liquid jet, which may contain a further reactant or reactant mixture, whereby the dissolved substance or the product obtained therefrom is precipitated again. Such dispersions, for example nanoscale barium sulphate dispersions, can also be prepared by chemical precipitation as described in DE 10 2017 110 292 A1.

However, the product can also be obtained in the form of a dried powder. Here the reactants are mixed very quickly in a microjet reactor, whereby the reactants react at the collision point to form the desired product, which precipitates in the form of nanoparticles. The resulting nanoparticle suspension is expelled from the microjet reactor either with highly heated compressed air or an inert gas or without the use of a carrier gas. The liquids, for example the solvent and non-solvent, evaporate and at the end of the process the nanoparticles are available as powder. This procedure is particularly suitable if the inorganic particles are to be surface-modified, for example if they are to be coated with surface-modifying molecules or polymers.

For coating with surface-modifying molecules or polymers, one of the reactants is dissolved together with one or more surface-active molecules or polymers. This solution as well as the non-solvent or the reactant agent, which may comprise one or more further reactants, are then pumped by means of two pumps, each through its own piping or capillaries, for example made of stainless steel, at a preferably constant flow rate and constant pressure and collide with each other in the microjet reactor. Both liquid streams are mixed very quickly in the microjet reactor, whereby the inorganic product, for example barium sulphate, precipitates as nanoparticles and the resulting nanoparticle suspension is expelled from the microjet reactor. A process for surface coating using this technology is described, for example, in DE 10 2009 008 478 A1. The surface coating not only gives the inorganic particles a desired property, but also prevents or reduces further aggregation of the particles and thus the Oswald growth of the particles.

However, the particles can also be stabilized without surface modification in the manufacturing process to prevent agglomeration or even aggregation. Inert neutral particles, such as barium sulphate (BaSO₄), calcium sulphate (CaSO₄) and calcium carbonate (CaCO₃), are basically characterised by electrical surface neutrality and the absence of reactive surface centres. Such particle dispersions can therefore tend to agglomerate or even aggregate during the manufacturing process.

Agglomeration or aggregation can be prevented or at least reduced if one of the reactants is supplied in excess to the collision point (as described for example in DE 10 2017 110 292 A1). The reactant supplied in excess to the collision point (compared to the stoichiometric ratio in the final product) can be either the cation or the anion. The resulting precipitated particles show an electrostatically active partial charge due to the incorporation of this slight surplus and can therefore be stabilized very easily and simply. The surplus can be preferably 1.01 to 2.0 times, preferably 1.05 to 1.4 times, and particularly preferably 1.1 to 1.3 times, the amount of the respective reactant corresponding to the stoichiometric ratio of the end product. The excess can be achieved by using different nozzle diameters in the microjet reactor, a different concentration of the first reactant to the concentration of the second reactant, and/or a different flow rate of the first reactant and the second reactant.

Particles, such as barium sulphate (BaSO₄), calcium sulphate (CaSO₄) and calcium carbonate (CaCO₃), can be produced by using as reactants two salt solutions, one solution providing the cation, for example Ba²⁺ as a BaCl₂ solution, and the other solution providing the anion, for example SO₄²⁻ as a Na₂SO₄ solution. These salt based methods lead to the formation of salt by-products, e.g. sodium chloride in the given example, which have to be removed, for example via X-flow filtration. Also there may be limitations due to the maximum solubility of one or both ion sources. For example, the maximum amount of barium sulphate which can be prepared by a method basing on solutions of barium chloride and sodium sulphate is limited to the maximum solubility of the barium source, which is about 23 % at room temperature, and the sulfate source, which is about 14 % at room temperature. A typical process basing on precipitation of barium chloride and sodium sulphate yields crude barium sulphate dispersion with a solid content between 9 to 14 % (m/m) which has to be purified and concentrated before shipment. Purification and concentration can be performed by ultrafiltration (X-flow filtration). The application resulted in purified dispersions with a solid content of 25 %. Beside this dispersion, waste water was produced in a ratio of about 10:1 related to the final dispersion. The waste water had to be post treated to be removable.

In an attempt to overcome or minimize these or some of these drawbacks the particles, such as barium sulphate (BaSO₄), calcium sulphate (CaSO₄) and calcium carbonate (CaCO₃), can be produced by performing a new process, which does not employ dissolved salt sources as reactants. Instead the reactants providing the cation and the anion are a base and an acid, respectively. For example, when the production of barium sulphate particles is intended, the new process does not employ a dissolved barium salt source, but employs barium hydroxide (Ba(OH)₂) in form of a slurry. By doing this, high concentrations of barium can be provided. The sulphate anion is provided via sulfuric acid (H₂SO₄), which is available in concentrations up to 100 % on the market and can be used at high concentration in the MJR process. As already mentioned above, the solution of sulfuric acid can be injected via the first and the second nozzle, while the suspension of barium hydroxide is provided via the opening 3 to the reaction chamber of the microjet reactor.

With the new process, barium sulphate particles, but also other inorganic particles e.g. for component (B) of the present invention, can be prepared with high concentration and purity in a one-step process. For example, barium sulfate concentrations of more than 30 % can be prepared in a one-step process without additional concentration and purification steps and as a consequence without waste water production and post-treatment. The only by-product produced is water.

This new process is a further subject matter of the present invention. The process comprises the steps of:
- providing a suspension of at least the base reactant, for example a suspension of barium hydroxide;
- providing a solution of at least the acid reactant, for example a sulfuric acid solution, which may in case of need be diluted to an appropriate concentration;
- precipitating the particulate component (B) by mixing liquid streams from the obtained suspension and the obtained solution in flow through a micro-reactor, preferably a microjet reactor; and
- discharging the thus obtained particulate component (B).

If a surface modification is desired, the method further comprises a step of providing a solution, for example an aqueous solution, of at least one surface modifier. The base reactant is preferably suspended in this solution then.

The precipitation can be carried out by directing jets of the acid reactant or a mixture comprising the acid reactant emerging from the first nozzle and the second nozzle, and a stream of a base reactant or a mixture of the base reactant and at least one surface modifier entering the reaction chamber via the opening 3 towards one another at defined pressures and flow rates in the reactor space of the microjet reactor at a collision point, as is shown in Figure 5.

As described above, this process is advantageous over salt based routes, because there is no salt by-product formation within the precipitation process, so that no subsequent purification steps are necessary. Thus, no waste water is produced, which might need to be post-treated, and there is no unnecessary water disposure of the product during purification. What is even more, is that high initial solid contents, for example up to 35 %, can be achieved. Said in other words, the novel process provides better economics combined with higher environmental compatibility and sustainability.

Inorganic particles, such as barium sulphate, calcium sulphate and calcium carbonate particles, as well as surface-modified inorganic particles, such as particles having a barium sulphate, calcium sulphate or calcium carbonate core, prepared by this new process are also a subject matter of the present invention. The present invention also encompasses the use of these particles for stabilizing a liquid or pasty pigment and/or filler preparation by avoiding or reducing the agglomeration of the pigment and/or filler particles. Surface-modified, the component (B) has a cationic, anionic, amphoteric or non-ionic surface. The component (B) in the pigment and/or filler preparation further has a zeta potential which is opposite to the charge of the particles of component (A).

Also encompassed by the present invention is a method of stabilizing a liquid or pasty pigment and/or filler preparation by avoiding or reducing the agglomeration of the pigment and/or filler particles. The method comprises using these particles / component (B) and dispersing therein the pigment(s) and/or filler(s). For example, a dispersion of component (B), wherein the particles are surface-modified, can be presented in a mill base, and then the pigment or various pigments and/or the filler or various fillers is/are homogenized therein by dispersing. Surface-modified, the component (B) has a cationic, anionic, amphoteric or non-ionic surface. The component (B) in the pigment and/or filler preparation further has a zeta potential which is opposite to the charge of the particles of component (A).

The process for producing the particulate component (B) can be operated discontinuously or continuously.

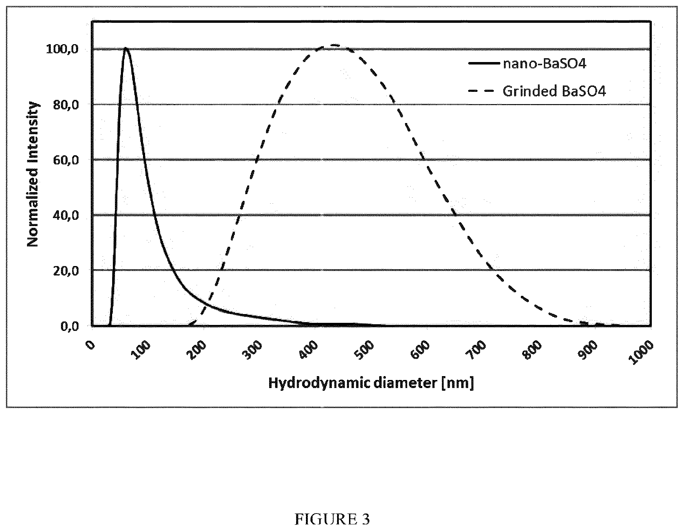

Also included in the invention are thus inorganic, particulate components which are surface-modified as described above, which have been produced according to one of the methods described above. They are preferably nanoscale and are preferably characterised by a narrow particle size distribution, as also shown in Figure 3. For the preferred particle size, reference is made to the above disclosure.

The liquid or pasty pigment and/or filler preparations according to the invention can be produced by a process comprising the following steps.

First the individual components of the pigment and/or filler preparation are provided. The pigment or the pigment mixture and/or the filler or the filler mixture is provided as dry substance or in the form of a pre-dispersion in a suitable dispersion medium. Providing as dry substance is preferred.

The particulate component (B) described above is also provided either as dry powder or as a particulate dispersion. The particulate dispersion can be obtained directly by microjet technology, as described above. If the particulate component (B) is provided as a dry powder, it is pre-dispersed in a suitable dispersion medium in a first step. The dispersion medium can be water, for example.

In a next step, the pigment or various pigments and/or the filler or various fillers (component (A)) are homogenized by dispersion. In this process, in addition to the water and/or the at least one solvent, either the entire amount or at least a partial amount of the particle dispersion (B), and optionally of the surface-active wetting agent (C) and/or optionally of the other one or more additives or auxiliaries as specified above, can be added to the pigment or the various pigments and/or the filler or the various fillers (component (A)) and the suspension thus obtained is then preferably subjected to wet comminution. The remaining amount of the particle dispersion (B) may be added before or after wet comminution, if necessary. Wet comminution can be achieved, for example, by grinding the mixture thus obtained in an agitator bead mill. It is advantageous if the entire quantity of the particulate component (B) is already present during wet comminution. The remaining quantity of component (B) which may still be missing is therefore preferably added before wet comminution.

The pigment and/or filler preparation thus obtained can be used for colouring organic and inorganic materials, inter alia, for the production of emulsion paints, car paints, decorative paints by stirring, grinding and/or extruding. The preparations according to the invention can also be used for colouring plastics. The preparations can be added during the extrusion process, for example.

The pigment and/or filler preparations according to the invention are characterized by numerous advantages. By using the nanoscale or microscale particulate component (B) as dispersant, the proportion of dispersant can be reduced. The amount of humectant can also be reduced. This not only saves costs in the manufacturing process, it also reduces problems with possible incompatibilities between individual components in intermediate or end products.

Furthermore, it was surprisingly found that the sedimentation of pigment and/or filler can be reduced by using the nanoscale or microscale particulate component (B). For example, sedimentation stabilities of the pigment and/or filler preparations according to the invention of more than 3 months at 40 °C were determined. In addition, pigment stabilization and optical performance could be improved, which as a direct consequence requires less pigment and/or filler input and thus again saves production costs and conserves resources. The use of further additives for pigment stabilization is not necessary. The particles of component (B) cause an electrosteric or at least electrostatic or steric stabilization of the liquid or pasty pigment and/or filler preparation.

In a further aspect, the present invention therefore is also concerned with paints and varnishes comprising the pigment and/or filler preparation described above.

Pigment and/or filler preparations for colouring and/or finishing paints or varnishes are advantageous because they contain a high concentration of pigment and/or filler in a pre-dispersed and standardised form and thus ensure simple and exact incorporation of the pigment and/or the filler.

The pigment and/or filler preparation can be formulated in the same way as the paint or varnish itself and comprise the corresponding additives, solvents and/or binders. In the case of the pigment and/or filler preparations according to the invention, however, it is particularly advantageous that they can be simply formulated with regard to their components and that additives still necessary in the state of the art can be dispensed with. Thus, the pigment and/or filler preparations according to the invention are compatible with a large number of paint and varnish systems.

According to a preferred embodiment of the present invention, the liquid or pasty pigment and/or filler preparation according to the invention is comprised in the paint or varnish in a proportion in the range of 1-70 % by weight, based on the total composition. The proportion is even more preferably in the range of 1-50 % by weight, most preferably at 1-30 % by weight. The skilled person can determine suitable proportions, depending on the application and pigment and/or filler, without any problems. Basically, pigments and fillers are used very variably in the paint/varnish sector. In the case of carbon black, for example, the proportion in the varnish is often in the range of a few percent, while a filler, such as titanium dioxide, can also be present in the final formulation up to 30 %. Preparations according to the invention have the advantage that they can also provide high pigment and/or filler concentrations in a standardized and stable form. In the case of pigment preparations according to the invention (colour pastes), the pigment and/or filler preparations according to the invention can preferably be used with a proportion in the range of 1 to 30 % by weight, based on the total composition. In the case of filler pastes according to the invention, the pigment and/or filler preparations according to the invention can preferably be used in a proportion in the range of 1 to 70 % by weight, based on the total composition.

According to one embodiment of the present invention, the paint is selected from the group consisting of dispersion paints, architectural decorative paints, coat of paints and printing inks.

According to a further embodiment of the present invention, the varnish is an automotive varnish, in particular an OEM varnish, or a varnish for coil coating, for example for continuous metal strip coating.

The coil-coated metals thus obtained, for example coated steel or aluminium sheets, are also included in the scope of protection of the present invention. Sheets coated in this way can be used, for example, in roof and facade construction, but also in the manufacture of electrical and household appliances, such as washing machines, microwave ovens and refrigerators, housings of switch cabinets, EDP devices and lights, lamellas for blinds, sheet metal doors and gates, etc. Coil coating replaces subsequent powder coating.

The production of the paints and varnishes is carried out according to the usual procedures well known to the skilled person.

In a further aspect, the present invention concerns the use of an inorganically or organically surface-modified, nanoscale or microscale inorganic particulate component (B) for stabilizing a liquid or pasty pigment and/or filler preparation by preventing or reducing agglomeration of pigment and/or filler particles. Due to the surface modification, component (B) has a cationic, anionic, amphoteric or non-ionic surface. In addition, component (B) has a zeta potential in the liquid or pasty pigment and/or filler preparation or in the production of the liquid or pasty pigment and/or filler preparation, which is opposite to the charge of the pigment and/or filler particles. With regard to preferred forms of the pigment and/or filler particles, reference is made to the above disclosure regarding component (A). The same applies to component (B), both with regard to its inorganic core and to the surface modifier.

Within the use according to the present invention, it is preferred that in the case that the pigment and/or filler particles have a positive surface charge, the zeta potential of component (B) is in the range of -70 mV to -2 mV, even more preferably in the range of -60 mV to -3 mV. If the pigment and/or filler particles have a negative surface charge, it is preferred that the zeta potential of component (B) is in the range of +0.5 mV to +40 mV, even more preferably in the range of +1 mV to +35 mV.

Also encompassed by the present invention is a method of stabilizing a liquid or pasty pigment and/or filler preparation by avoiding or reducing the agglomeration of the pigment and/or filler particles. The method comprises using the above described inorganic particles, which can be surface-modified, and dispersing therein the pigment(s) and/or filler(s). For example, a dispersion of component (B), wherein the particles are surface-modified, can be presented in a mill base, and then the pigment or various pigments and/or the filler or various fillers is/are homogenized therein by dispersing. Surface-modified, the component (B) has a cationic, anionic, amphoteric or non-ionic surface. The component (B) in the pigment and/or filler preparation further has a zeta potential which is opposite to the charge of the particles of component (A). With regard to preferred forms of the pigment and/or filler particles, reference is made to the above disclosure regarding component (A). The same applies to component (B), both with regard to its inorganic core and to the surface modifier.

### BRIEF DESCRIPTION OF THE FIGURES

- Figure 1:: Figure 1 shows the principles of electrostatic (Fig. 1A), steric (Fig. 1B) and electrosteric (Fig. 1C) stabilization.
- Figure 2:: Figure 2 shows a structure of component (B), in this case barium sulphate, and a pigment component (A). In figure 2A the structure for a pigment with positive surface charge is shown, in figure 2B for a pigment with negative surface charge. Figure 2C is an enlarged view of figure 2A, and figure 2D is an enlarged view of figure 2B.
- Figure 3:: Figure 3 compares the normalized size distribution of barium sulphate dispersions. A dispersion produced according to the MJR technology used in the invention (left curve) is characterized by a smaller particle size and a narrower size distribution. Conventionally ground and dispersed barium sulphate (right curve) consists of larger particles and is characterized by a broader size distribution.
- Figure 4:: Figure 4 shows the combination of a negatively charged particle (here barium sulphate) with an amphiphilic wetting agent for pigment stabilization.
- Figure 5:: Figure 5 is a schematic illustration of an MJR process according to the invention for producing the particulate component (B).

### EXAMPLES

### Example 1: Preparation of a surface-modified barium sulphate dispersion

A process for producing a low-viscosity aqueous, surface-modified barium sulphate dispersion for a pigment and/or filler preparation according to the invention at room temperature comprises the following steps:
a) Providing a barium salt solution (halide, nitrate or carboxylate).
b) Providing an alkali sulphate solution.
c) Providing at least one comb polymer with a specific charge of -10 C/g to -500 C/g at pH 8.
d) Mixing the barium salt solution from step a) with the comb polymer from step c) in an amount of preferably 0.5 to 20 %, preferably 1 to 10 % and most preferably 3 to 8 % relative to the solid product.
e) Precipitating barium sulphate by mixing liquid streams from steps b) and d) in flow through a micro-reactor, preferably a microjet reactor, where the product is discharged by a carrier gas flow.

At the flow/collision point of the microreactor, in which the product is discharged by a carrier gas stream (nitrogen flow: 1,000 cm³/min), the alkali sulphate solution (for example sodium sulphate solution) and the barium salt solution (for example barium chloride solution) react with each other in the form of stirred aqueous solutions in a molar ratio of 1.0 : 1.05. The barium chloride solution has a density of 1.043 g/ml and comprises 3 % of a polycarboxylate ether, for example Melpers 2454, based on the theoretical yield of barium sulphate. The comb polymer Melpers 2454 inter alia beneficially effects the stabilisation of the obtained BaSO₄ particles with regard to growth and agglomeration. The white dispersion thus obtained can be purified by ultrafiltration until an electrical conductivity of 1,000 µS/cm is achieved and is a low-viscosity aqueous barium sulphate dispersion which can be concentrated to up to 50 % by ultrafiltration.

### Example 2: Preparation of a surface-modified barium sulphate dispersion based on Ba(OH)₂ x 8 H₂O

Another process for producing a surface-modified barium sulphate dispersion for a pigment and/or filler preparation according to the invention at room temperature is based on the reaction Ba(OH)₂ + H₂SO₄ → BaSO₄ + 2 H₂O and comprises the following steps:
a) Providing a solution of 157 g Melpers 0045 dissolved in 843 g of deionized water.
b) Suspending 1577 g Ba(OH)₂ x 8 H₂O in the solution of step a) under stirring.
c) Providing a 5 M sulfuric acid solution.
d) Precipitating barium sulphate by mixing liquid streams from steps b) and c) in flow through a micro-reactor, preferably a microjet reactor.
e) Discharging the thus obtained barium sulphate dispersion.

The suspension of step b) is continuously pumped through the upper entrance (opening 3) of a reaction chamber. In the middle of the reaction chamber, the diluted 5M sulfuric acid solution is added continuously via two ruby nozzles with a diameter of 100µm into the Ba(OH)₂ stream to form BaSO₄ and water. During addition the molar ratio of Ba(OH)₂ to H₂SO₄ is kept at 1:0.95. The resulting colloidal dispersion has a barium sulphate content of 34.97 % (m/m) (the theoretically obtainable value is 36 %) and a particle size of 170 nm (DLS, z-Average).

The advantages in comparison to a BaCl₂-based route are:
- no sodium chloride formation within the precipitation process;
- high initial solid contents up to 35 %;
- no subsequent X-flow filtration;
- no waste water production;
- no waste water post-treatment; and
- no water disposure.

### Example 3: Preparation of a pigment preparation according to the invention

All components of the preparation except for the pigment (Printex U) are presented in the ground stock (Table 1). Afterwards, the pigment is added to the ground stock over a period of 5 min via a rotor-stator system (Miccra D-13, 14,000 rpm) and dispersed. Post-homogenization for a further 5 min at 14,000 rpm provides a flowable pigment formulation (outlet cup 32s, nozzle 3 mm, DIN EN ISO 2431). The resulting dispersion has a negative zeta potential (-25 mV) and a d50 value of 1.1 µm (d10=0.63 µm, d90=1.67 µm).

The composition of the preparation is as follows:
13.20 % by mass nanoscale BaSO₄ according to example 1 or example 2
59.85 % by mass water
0.20 % by mass Ebotec MT15SF
0.30 % by mass Dimethylethanolamine 50%
4.75 % by mass Zetasperse^{®} 3700
21.30 % by mass Printex U
0.40 % by mass Surfynol 104 E

The dispersing agents Zetasperse^{®} 3700 and dimethylethanolamine can be added to the dispersing medium at the same time as the pigment Printex U, or they can be mixed with it in advance.

Due to the advantageous properties of the nanoscale barium sulphate, the necessary proportion of dispersing agents can be significantly reduced or dispensed with altogether.

### Example 4: Zeta potentials

The zeta potentials of a dispersion of particulate, surface-coated barium sulphate were determined in an aqueous medium in the presence of various agents. The surface coated barium sulphate particles were modified with 1 % of the respective agent and the zeta potentials were determined by electrophoretic light scattering according to ISO 13099-2:2012.

The zeta potential was measured using a Zetasizer Nano ZS90 from Malvern Instruments Ltd., Herrenberg. By applying an alternating electric field and the resulting movement of charged particles in dispersion, the speed of movement of the particles in the electric field is measured by interferrometric laser technology. This in turn allows the calculation of the electrophoretic mobility and the resulting zeta potential by the implemented software Zetasizer Ver. 7.11. Standard zeta cuvettes were used for the measurement. In all cases the measurement was temperature controlled at 25°C.

Sample preparation: To measure the zeta potential, 0.82 g of a 24.31 % by weight aqueous surface coated barium sulphate dispersion with a conductivity < 1 mS were added to 40 g of a 1 % by weight agent solution (based on active content) and mixed for 30 secs. 1 mL of the sample is transferred bubble-free into a standard zeta cuvette, transferred to the measuring instrument and measured quickly after reaching thermal equilibrium.

The results are summarized in Table 1:

| Modifying Agent | Zeta Potential of the Surface coated BaSO₄ dispersion [mV] |
|---|---|
| Efka FA 4671 | -59.9 |
| Disperbyk 2010 | -37.3 |
| Dispers 757W | -20.4 |
| Metolat 514 | -18.7 |
| Zetasperse 3600 | -17.9 |
| Dispex Ultra PX 4525 | -13.9 |
| Edaplan 494 | -12.6 |
| Disperbyk 2060 | -12.0 |
| Zetasperse 3700 | -11.9 |
| Dispex Ultra PX 4275 | -11.8 |
| Disperbyk 180 | -10.8 |
| Dispex CX 4320 | -10.6 |
| Edaplan 490 | -10.5 |
| Edaplan 516 | -7.61 |
| Tego Dispers 755W | -4.57 |
| Disperbyk 191 | -3.3 |
| Dispex Ultra FA 4420 | -3 |
| Tego Dispers 760W | -2.56 |
| Disperbyk 184 | 1.05 |
| Byk LP N 22669 | 2.58 |
| Efka WE 3110 | 3.96 |
| Carbowet GA 211 | 4.4 |
| Carbowet 221 | 4.72 |
| Dispex Ultra FA 4480 | 5.77 |
| Disperbyk 192 | 6.37 |
| Dispersogen PCE | 8.05 |
| Disperbyk 182 | 10.1 |
| Dispex Ultra PX 4575 | 14.9 |
| Dispex Ultra FA 4425 | 17.4 |

## Claims

1. A liquid or pasty pigment and/or filler preparation comprising
- 1 to 70 % by weight of at least one pigment dispersed in the preparation and/or at least one filler dispersed in the preparation, as component (A),
- 1 to 25 % by weight of at least one inorganic particulate component dispersed in the preparation, as component (B),
- 0 to 10 % by weight of at least one surface-active wetting agent, preferably also having dispersing properties, as component (C), and
- water and/or at least one solvent,
wherein the particles of component (B) are inorganically or organically surface-modified, the surface modifier used being selected such that component (B) has a cationic, anionic, amphoteric or non-ionic surface, and component (B) further has a zeta potential opposite to the charge of the particles of component (A) or, in the case of uncharged particles of component (A), has a zeta potential in the range of -60 to +40 mV so as to cause adhesion of the particles (B) to the pigment and/or filler surface, wherein the zeta potential is measured in accordance with ISO 13099-2:2012 by electrophoretic light scattering, and
wherein the inorganic core of the particles of component (B) comprises barium sulphate, calcium sulphate, or calcium carbonate or the core is a barium sulphate particle, a calcium sulphate particle, or a calcium carbonate particle, and
wherein the particles of the dispersed component (B) have a particle size distribution with a d50 value in the range of 10 to 500 nm, the determination being carried out by dynamic light scattering according to ISO 22412:2008 to determine the hydrodynamic d50 value.

2. The pigment and/or filler preparation according to claim 1, wherein the inorganic core of the particles of component (B) comprises barium sulphate or the core is the barium sulphate particle.

3. The pigment and/or filler preparation according to claim 1 or claim 2, wherein the particles of the dispersed component (B) have a particle size distribution with a d50 value in the range of 20 to 300 nm, and particularly preferably in the range of 25 to 200 nm.

4. The pigment and/or filler preparation according to any one of the preceding claims, wherein the particles of component (B) are surface-modified with at least a comb polymer-based surface modifier, which comb polymer comprises or has a polyacrylate main chain and PEG side chains, and the PEG side chains have a number average molecular weight Mn in the range of 500 to 6,000 g/mol determined by gel permeation chromatography.

5. The pigment and/or filler preparation according to any one of the preceding claims, wherein the mass fraction of the surface modifier, based on the inorganic core of component (B) is 0.1 to 50 %, and preferably is 0.2 to 10 % .

6. The pigment and/or filler preparation according to any one of the preceding claims, wherein, if the component (A) has a positive surface charge, the zeta potential of the component (B) is in the range of -60 mV to -3 mV, if the component (A) has a negative surface charge, the zeta potential of the component (B) is in the range of +1 mV to +40 mV, and if a non-polar pigment or filler is used, an additional wetting agent is used, the wetting agent being an amphiphilic molecular or polymeric wetting agent and/or being an anionic or cationic wetting agent with pigment-wetting properties.

7. The pigment and/or filler preparation according to any one the preceding claims, wherein the preparation further comprises at least one dispersing agent.

8. The pigment and/or filler preparation according to claim 7, wherein the dispersing agent or more dispersing agents are comprised in an amount of 1 to 10 % by weight.

9. The pigment and/or filler preparation according to claim 7 or claim 8, wherein the dispersing agent is selected from the group consisting of polyvinyl copolymers, polyvinyl copolymers with pigment affine groups, ethoxylated alcohols, dimethylethanolamine and any mixtures thereof.

10. The pigment and/or filler preparation according to any one the preceding claims,
wherein the preparation further comprises at least one surfactant, the one or more surfactants being present in an amount of 0.1 to 2 % by weight.

11. A process for preparing a pigment and/or filler preparation according to any one of claims 1 to 10, which process comprises the following steps:
a. presenting a dispersion of the surface-modified particles (component B) in the mill base,
b. homogenizing the pigment and/or filler (component A) by dispersing.

12. The process of method 11, wherein presenting the dispersion of surface-modified particles (component B) comprises:
- providing a suspension of a basic reactant in a solution of the at least one surface-modifier;
- providing a solution of an acid reactant, the basic reactant and the acid reactant being selected so as to provide the anion and the cation of the material comprised in or forming the core of the surface-modified particles (B);
- precipitating the particulate component (B) by mixing liquid streams from the obtained suspension and the obtained solution in flow through a micro-reactor, preferably a microjet reactor; and
- discharging the thus obtained particulate component (B).

13. The process of claim 12, wherein the precipitating of the particulate component (B) is carried out in the microjet reactor, the microreactor comprises:
at least two nozzles located opposite one another, each nozzle with an associated pump and feed line adapted to spray one liquid medium at a time into a reactor chamber enclosed by a reactor housing at a common collision point;
a first opening is formed in the reactor housing, the opening being adapted to supply a reactant to the reaction chamber; and
a second opening adapted to remove resulting products from the reactor housing,
wherein the precipitation is carried out by directing jets of the solution of the acid reactant from the at least two nozzles and a stream of the mixture of the basic reactant and the at least one surface modifier from the first opening towards one another at the collision point.

14. The process of claim 12 or 13, wherein the material comprised in or forming the core of the surface-modified particles (B) is barium sulphate, the core acid reactant is sulfuric acid and the basic reactant is barium hydroxide.

15. A paint or varnish comprising the liquid or pasty pigment or filler preparation according to any one of claims 1 to 10.

## Patentansprüche

1. Flüssiges oder pastenartiges Pigment- und/oder Füllstoffpräparat umfassend
- 1 bis 70 Gew.-% mindestens eines Pigments, das in dem Präparat dispergiert ist, und/oder mindestens eines Füllstoffs, der in dem Präparat dispergiert ist, als Komponente (A),
- 1 bis 25 Gew.-% mindestens einer anorganischen partikelförmigen Komponente, die in dem Präparat dispergiert ist, als Komponente (B),
- 0 bis 10 Gew.-% mindestens eines oberflächenaktiven Benetzungsmittels, das bevorzugt auch Dispergiereigenschaften aufweist, als Komponente (C) und
- Wasser und/oder mindestens ein Lösungsmittel,
wobei die Partikel der Komponente (B) anorganisch oder organisch oberflächenmodifiziert sind, wobei der verwendete Oberflächenmodifikator so ausgewählt wird, dass die Komponente (B) eine kationische, anionische, amphotere oder nichionische Oberfläche aufweist und die Komponente (B) ferner ein der Ladung der Partikel der Komponente (A) entgegengesetztes Zeta-Potential aufweist oder im Fall von ungeladenen Partikeln der Komponente (A) ein Zeta-Potential im Bereich von -60 bis + 40 mV aufweist, um die Haftung der Partikel (B) an die Pigment- und/oder Füllstoffoberfläche zu verursachen, wobei das Zeta-Potential ISO 13099-2:2012 entsprechend durch elektrophoretische Lichtstreuung gemessen wird und
wobei der anorganische Kern der Partikel von Komponente (B) Bariumsulfat, Calciumsulfat oder Calciumcarbonat umfasst oder der Kern ein Bariumsulfatpartikel, ein Calciumsulfatpartikel oder ein Calciumcarbonatpartikel ist und
wobei die Partikel der dispergierten Komponente (B) eine Partikelgrößenverteilung mit einem d50-Wert im Bereich von 10 bis 500 nm aufweisen, wobei die Bestimmung durch dynamische Lichtstreuung ISO 22412:2008 entsprechend ausgeführt wird, um den hydrodynamischen d50-Wert zu bestimmen.

2. Pigment- und/oder Füllstoffpräparat nach Anspruch 1, wobei der anorganische Kern der Partikel von Komponente (B) Bariumsulfat umfasst oder der Kern das Bariumsulfatpartikel ist.

3. Pigment- und/oder Füllstoffpräparat nach Anspruch 1 oder Anspruch 2, wobei die Partikel der dispergierten Komponente (B) eine Partikelgrößenverteilung mit einem d50-Wert im Bereich von 20 bis 300 nm und besonders bevorzugt im Bereich von 25 bis 200 nm aufweisen.

4. Pigment- und/oder Füllstoffpräparat nach einem der vorhergehenden Ansprüche, wobei die Partikel von Komponente (B) mit mindestens einem Oberflächenmodifikator auf Kammpolymerbasis oberflächenmodifiziert sind, welches Kammpolymer eine Polyacrylathauptkette und PEG-Seitenketten umfasst oder aufweist und die PEG-Seitenketten ein zahlendurchschnittliches Molekulargewicht Mn im Bereich von 500 bis 6,000 g/Mol aufweisen, bestimmt durch Gelpermeationschromatographie.

5. Pigment- und/oder Füllstoffpräparat nach einem der vorhergehenden Ansprüche, wobei der Massenanteil des Oberflächenmodifikators auf der Basis des anorganischen Kerns von Komponente (B) 0,1 bis 50 % beträgt und bevorzugt 0,2 bis 10 % beträgt.

6. Pigment- und/oder Füllstoffpräparat nach einem der vorhergehenden Ansprüche, wobei, wenn die Komponente (A) eine positive Oberflächenladung aufweist, das Zeta-Potential der Komponente (B) im Bereich von -60 mV bis -3 mV liegt, wenn die Komponente (A) eine negative Oberflächenladung aufweist, das Zeta-Potential der Komponente (B) im Bereich von +1 mV bis +40 mV liegt und wenn ein nichtpolares Pigment oder ein nichtpolarer Füllstoff verwendet wird, ein zusätzliches Benetzungsmittel verwendet wird, wobei das Benetzungsmittel ein amphiphiles molekulares oder polymeres Benetzungsmittel ist und/oder ein anionisches oder kationisches Benetzungsmittel mit Pigmentbenetzungseigenschaften ist.

7. Pigment- und/oder Füllstoffpräparat nach einem der vorhergehenden Ansprüche, wobei das Präparat ferner mindestens ein Dispergiermittel umfasst.

8. Pigment- und/oder Füllstoffpräparat nach Anspruch 7, wobei das Dispergiermittel oder die mehreren Dispergiermittel in einer Menge von 1 bis 10 Gew.-% beinhaltet ist/sind.

9. Pigment- und/oder Füllstoffpräparat nach Anspruch 7 oder Anspruch 8, wobei das Dispergiermittel aus der Gruppe ausgewählt ist bestehend aus Polyvinylcopolymeren, Polyvinylcopolymeren mit pigmentverwandten Gruppen, ethoxylierten Alkoholen, Dimethylethanolamin und irgendwelchen Mischungen davon.

10. Pigment- und/oder Füllstoffpräparat nach einem der vorhergehenden Ansprüche, wobei das Präparat ferner mindestens ein Tensid umfasst, wobei das eine oder die mehreren Tenside in einer Menge von 0,1 bis 2 Gew.-% vorliegen.

11. Verfahren für die Herstellung eines Pigment- und/oder Füllstoffpräparats nach einem der Ansprüche 1 bis 10, wobei das Verfahren die folgenden Schritte umfasst:
a. Vorlegen einer Dispersion der oberflächenmodifizierten Partikel (Komponente B) im Mahlgut,
b. Homogenisieren des Pigments und/oder Füllstoffs (Komponente A) durch Dispergieren.

12. Verfahren der Methode 11, wobei Vorlegen der Dispersion von oberflächenmodifizierten Partikeln (Komponente B) Folgendes umfasst:
- Bereitstellen eines Suspension eines basischen Reaktants in einer Lösung des mindestens einen Oberflächenmodifikators;
- Bereitstellen einer Lösung eines sauren Reaktants, wobei der basische Reaktant und der saure Reaktant so ausgewählt werden, das Anion und das Kation des Materials bereitzustellen, das den Kern der oberflächenmodifizierten Partikel (B) beinhaltet oder bildet;
- Ausfällen der teilchenförmigen Komponente (B) durch Mischen flüssiger Ströme aus der erhaltenen Suspension und der erhaltenen Lösung im Fluss durch einen Mikroreaktor, bevorzugt einen Mikrostrahlreaktor; und
- Abgeben der so erhaltenen teilchenförmigen Komponente (B).

13. Verfahren nach Anspruch 12, wobei das Ausfällen der teilchenförmigen Komponente (B) in dem Mikrostrahlreaktor ausgeführt wird, wobei der Mikroreaktor Folgendes umfasst:
mindestens zwei Düsen, die sich einander gegenüber befinden, jede Düse mit einer zugehörigen Pumpe und Speiseleitung, die geeignet sind, ein flüssiges Medium jeweilig in eine Reaktorkammer einzuspritzen, die durch ein Reaktorgehäuse an einem gemeinsamen Zusammenstoßpunkt eingeschlossen ist;
eine erste Öffnung in dem Reaktorgehäuse gebildet ist, wobei die Öffnung geeignet ist, einen Reaktant zur Reaktionskammer zu liefern; und
eine zweite Öffnung, die geeignet ist, resultierende Produkte aus dem Reaktorgehäuse zu entfernen,
wobei das Ausfällen durch Richten von Strahlen der Lösung des sauren Reaktants aus den mindestens zwei Düsen und eines Stroms der Mischung des basischen Reaktants und des mindestens einen Oberflächenmodifikators aus der ersten Öffnung aufeinander zu am Zusammenstoßpunkt ausgeführt wird.

14. Verfahren nach Anspruch 12 oder 13, wobei das Material, das den Kern der oberflächenmodifizierten Partikel (B) beinhaltet oder bildet, Bariumsulfat ist, der saure Kernreaktant Schwefelsäure ist und der basische Reaktant Bariumhydroxid ist.

15. Anstrichmittel oder Lack umfassend das flüssige oder pastenartige Pigment- und/oder Füllstoffpräparat nach einem der Ansprüche 1 bis 10.

## Revendications

1. Préparation de liquide ou de pigment pâteux et/ou de charge comprenant
- 1 à 70 % en poids d'au moins un pigment dispersé dans la préparation et/ou au moins une charge dispersée dans la préparation, comme composant (A),
- 1 à 25 % en poids d'au moins un composant de particule inorganique dispersé dans la préparation, comme composant (B),
- 0 à 10 % en poids d'au moins un agent de mouillage tensioactif, de préférence ayant aussi des propriétés de dispersion, comme composant (C) et
- de l'eau et/ou au moins un solvant,
les particules de composant (B) étant inorganiquement ou organiquement modifiées en surface, le modificateur de surface utilisé étant choisi de telle manière que le composant (B) a une surface cationique, anionique, amphotère ou non ionique et le composant (B) a en outre un potentiel zéta opposé à la charge des particules de composant (A) ou dans le cas de particules non chargées de composant (A), a un potentiel zéta dans la plage de -60 à +40 mV de manière à entraîner l'adhésion des particules (B) à la surface du pigment et/ou de la charge, le potentiel zéta étant mesuré selon la norme ISO 13099-2 : 2012 par diffusion de lumière électrophorétique et
le cœur inorganique des particules de composant (B) comprenant du sulfate de baryum, du sulfate de calcium ou du carbonate de calcium ou le cœur étant une particule de sulfate de baryum, une particule de sulfate de calcium ou une particule de carbonate de calcium et
les particules du composant (B) dispersé ayant une distribution de taille de particule avec une valeur d50 dans la plage de 10 à 500 nm, la détermination étant réalisée par diffusion de lumière dynamique selon la norme ISO 22412 : 2008 pour déterminer la valeur d50 hydrodynamique.

2. Préparation de pigment et/ou de charge selon la revendication 1, dans laquelle le cœur inorganique des particules de composant (B) comprend le sulfate de baryum ou le cœur est la particule de sulfate de baryum.

3. Préparation de pigment et/ou de charge selon la revendication 1 ou la revendication 2, dans laquelle les particules de composant (B) dispersées ont une distribution de taille de particule avec une valeur d50 dans la plage de 20 à 300 nm et particulièrement de préférence dans la plage de 25 à 200 nm.

4. Préparation de pigment et/ou de charge selon l'une quelconque des revendications précédentes, dans laquelle les particules de composant (B) sont modifiées en surface avec au moins un modificateur de surface à base de polymère de peigne, lequel polymère de peigne comprend ou a une chaîne principale de polyacrylate et des chaînes latérales de PEG et les chaînes latérales de PEG ont un poids moléculaire moyen en nombre Mn dans la plage de 500 à 6 000 g/mole, déterminée par chromatographie par perméation de gel.

5. Préparation de pigment et/ou de charge selon l'une quelconque des revendications précédentes, dans laquelle la fraction de masse du modificateur de surface, sur la base du cœur inorganique du composant (B) est de 0,1 à 50 % et de préférence de 0,2 à 10 %.

6. Préparation de pigment et/ou de charge selon l'une quelconque des revendications précédentes, dans laquelle, si le composant (A) a une charge de surface positive, le potentiel zéta du composant (B) se situe dans la plage de -60 mV à -3 mV, si le composant (A) a une charge de surface négative, le potentiel zéta du composant (B) se situe dans la plage de +1 mV à +40 mV et si un pigment ou une charge non polaire est utilisé, un agent de mouillage supplémentaire est utilisé, l'agent de mouillage étant un agent de mouillage moléculaire amphiphile ou polymère et/ou étant un agent de mouillage anionique ou cationique avec des propriétés de mouillage de pigment.

7. Préparation de pigment et/ou de charge selon l'une quelconque des revendications précédentes, dans laquelle la préparation comprend en outre au moins un agent dispersant.

8. Préparation de pigment et/ou de charge selon la revendication 7, dans laquelle l'agent dispersant ou plusieurs agents dispersants sont compris en une quantité de 1 à 10 % en poids.

9. Préparation de pigment et/ou de charge selon la revendication 7 ou la revendication 8, dans laquelle l'agent dispersant est choisi dans le groupe constitué par les copolymères de polyvinyle, les copolymères de polyvinyle avec des groupes affines de pigment, les alcools éthoxylés, la diméthyléthanolamine et l'un quelconque de leurs mélanges.

10. Préparation de pigment et/ou de charge selon l'une quelconque des revendications précédentes, dans laquelle la préparation comprend en outre au moins un tensioactif, les un ou plusieurs tensioactifs étant présents en une quantité de 0,1 à 2 % en poids.

11. Procédé de préparation d'une préparation de pigment et/ou de charge selon l'une quelconque des revendications 1 à 10, lequel procédé comprend les étapes suivantes consistant à :
a. présenter une dispersion des particules modifiées en surface (composant B) dans la base de broyage,
b. homogénéiser le pigment et/ou la charge (composant A) par dispersion.

12. Procédé selon le procédé 11, dans lequel la présentation de la dispersion de particules modifiées en surface (composant B) comprend :
- la fourniture d'une suspension d'un réactif basique dans une solution de l'au moins un modificateur de surface ;
- la fourniture d'une solution d'un réactif acide, le réactif basique et le réactif acide étant choisis pour fournir l'anion et le cation du matériau compris dans ou formant le cœur des particules modifiées en surface (B),
- la précipitation du composant particulaire (B) en mélangeant les courants liquides de la suspension obtenue et de la solution obtenue en écoulement à travers un micro-réacteur, de préférence un réacteur à microjet ; et
- la décharge du composant particulaire (B) ainsi obtenu.

13. Procédé selon la revendication 12, dans lequel la précipitation du composant particulaire (B) est réalisée dans le réacteur à microjet, le microréacteur comprend :
au moins deux buses situées à l'opposé l'une de l'autre, chaque buse avec une pompe associée et une ligne d'alimentation adaptée pour pulvériser un milieu liquide à un temps dans une chambre de réacteur enfermée par un logement de réacteur à un point de collision commun,
une première ouverture est formée dans le logement de réacteur, l'ouverture étant adaptée pour fournir un réactif à la chambre de réaction et
une seconde ouverture adaptée pour enlever les produits résultants du logement de réacteur,
la précipitation étant réalisée en dirigeant les jets de la solution du réactif acide à partir des au moins deux buses et un courant du mélange du réactif basique et de l'au moins un modificateur de surface de la première ouverture vers l'un l'autre au point de collision.

14. Procédé selon la revendication 12 ou 13, dans lequel le matériau compris dans ou formant le cœur des particules modifiées en surface (B) est le sulfate de baryum, le réactif acide de cœur est l'acide sulfurique et le réactif basique est l'hydroxyde de baryum.

15. Peinture ou vernis comprenant la préparation de liquide ou de pigment pâteux ou de charge selon l'une quelconque des revendications 1 à 10.
